# EUROPEAN PATENT SPECIFICATION

(11) **EP 2 107 926 B1**
(45) Date of publication and mention of the grant of the patent: **30.05.2018**
(21) Application number: 07734136.0
(22) Date of filing: 28.03.2007
(51) Int. Cl.: A63C 9/00, A43C 11/14, A01K 27/00

(54) **Leash with elastic element**
Leine mit elastischem element
Laisse avec élément élastique

(30) Priority: 30.03.2006 IT TV20060051
(43) Date of publication of application: 14.10.2009
(73) Proprietor: Martignago, Francesco, 31044 Montebelluna (TV) (IT)
(72) Inventor: Martignago, Francesco, 31044 Montebelluna (TV) (IT)
(74) Representative: Citron, Massimiliano
(86) International application number: PCT/IB2007/000814
(87) International publication number: WO 2007/116272

(56) References cited:
- EP-A- 0 450 575
- WO-A1-91/03961
- DE-C- 252 533
- DE-U- 1 939 542
- DE-U1- 8 520 488
- FR-A1- 2 552 640
- GB-A- 527 169
- JP-U- S4 925 275
- US-A- 4 834 224
- BÖNNEKAMP: 'CONICAL FOLDING BELLOWS', [Online] Retrieved from the Internet: <URL:http://www.bonnekamp.nl/en_US/CONICAL- FOLDING-BELLOWS.html> [retrieved on 2017-08-02]

## Description

The invention relates to a leash with an elastic/resilient element.

It is well known that, mainly in the footwear herein referred to as an example, straps or strips or bands are used as means to tighten the elements of the footwear together. By pulling the straps and/or modulating the tension of said straps, one can adjust the fit of the footwear to adapt to the shape of the wearer's foot. Examples of this kind are described in EP 0 808 946, US 4451 995, US 5 416 987, DE 19 39 542 U and US 5 966 843. The straps are flexible, at times elastic, and the ends of said straps are generally connected to traction means to vary the tension of said means. The materials mat the straps are composed of can be an elastic fabric, plastic, at times metal, or a combination thereof. When one wants to create an elastic strap, or an elastic tightening system, one usually uses elastic fabric or an inextensible strap connected to elastic fasteners. The elastic fabric is subjected to stress and may deteriorate quickly, and said elastic fabric could lose its elasticity over time. The elastic fasteners either offer a limited, low elasticity adjustment range or otherwise said elastic fasteners are relatively complex devices and costly to manufacture, requiring buckles, clasp mechanisms or ratchets.

DE252533C discloses an object to be used as a walking stick or a riding crop.

The object of the present invention is to create a leash with cushioning properties.

Such object is achieved with a leash as in claim 1.

The advantages of an elastic element according to the invention shall be made further evident by the following description, which is supplied only as a nonexclusive example and refers to the drawings attached where:
- fig. 1 shows a lateral view of an elastic element;
- fig. 2 shows an axonometric view of the element of fig. 1;
- fig. 3 shows a leash;
- fig. 4 shows a second leash.

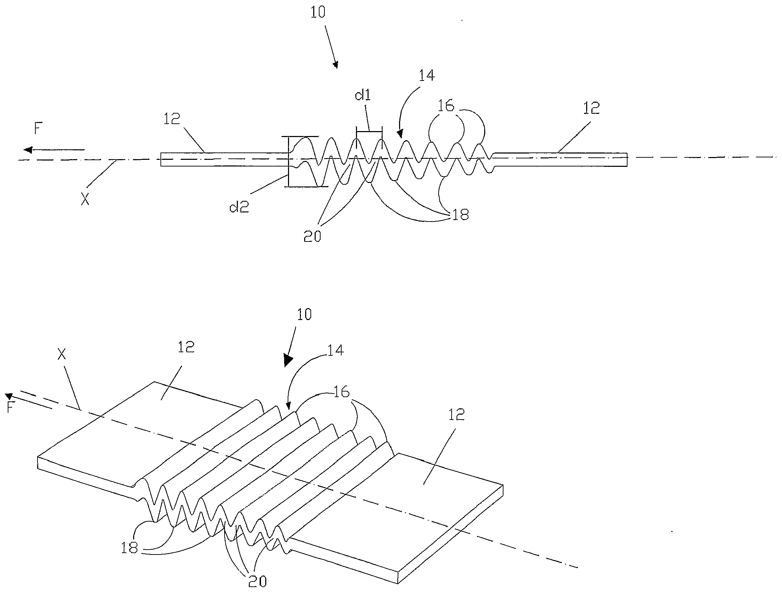

An elastic element is indicated with 10, and has two flat ends 12 and a section 14 in between with corrugated shape composed of segments 20 (only some of which are indicated) arranged bellows-like, i.e. zigzagged, and together connected to an end. The said corrugated shape has crests 16 and troughs 18, here intended as the highest or the lowest points on the corrugation/undulation in respect to a longitudinal axis X of symmetry - see fig. 2. The crests 5 16 and the troughs 18 extend orthogonally to the direction of traction F over all the width of the elastic element 10; however, in order to stiffen the element 10 and therefore limit the elasticity of said element one can, for example, to place side by side to the corrugated section 14 a flat section. The element 10 may be created for example in metal by means of a forming process or in plastic by means of a molding process. In the first case one can bend a metal 10 tongue to shape it according to the invention.

The section 14 - whose profile is clearly visible in fig. 2 - has an asymmetrical development, notwithstanding that said section could also be obtained with a regular corrugation/undulation. As shall be seen the unevenness in the profile of the corrugation provides many advantages. In the corrugation the distance d1 between two successive crests 15, 16 is not constant but increasing along a direction F along the axis X; and also increasing along the direction F is the distance d2 between a contiguous crest 16 and trough 18 and the subsequent ones (the length of the segments 20 increases). In fig. 2 for the sake of simplicity only some references 16, 18, d1, d2 are shown. In some applications it may be opportune to keep only one of the two increasing trends/patterns previously described, or to invert the 20 increasing sense of one in respect to the other or in respect to the direction F.

The distance d2 basically determines how far the corrugation of the section 14 is distanced from the axis X and, together with d1, how much the section 14 is lengthened along F when the element 10 is placed in traction at the ends 12 along the directrix X. Increasing d2, and maintaining unchanged d1, entails reducing the angle between the segments 20 and making the element 10 more extensible for the same tension value. Instead, d1 essentially determines the extension of the section 14.

During the designing stage the elastic constant of the element 10 is defined by determining d1, d2 and the number of segments 20 in the section 14. By keeping d1 and d2 constant in all the section 14, the maximum traction sustainable by the element 10 is definable by the number of segments 20, said segments that however also determine the maximum elongation of the element 10 and the extension of the section 14 with no tractive force applied. Vice versa, once established the number of the segments 20, the maximum traction sustainable and the maximum elongation of the element 10 is determined. If, according to the invention, d1 and d2 vary in the section 14 other degrees of freedom are available during the designing stage and also other advantages, for example one can define, for the same extension with no tractive force applied, the maximum elongation desired for the section 14 at a certain maximum traction force and also the number of segments 20 (i.e. the extension of the section 14 with no traction force applied). One can therefore understand that specific dimensional specifications can be satisfied by exploiting the modulation of the dimensions of d1, d2. The element is open to many variants, among which:
- an arrangement of the corrugation in the section 14 not exactly perpendicular to the directrix X, but transversal;
- other types of profiles for the corrugation, such as sinusoidal or triangular;

The section 14 can have different shapes and the plan view does not necessarily have to be rectangular. Lastly, the segments 20 in the example are arranged in such a way that their intermediate point substantially lies on the axis X, but the corrugated shape can have a different trend/pattern, for example arched, in order to have all the segments 20 on the same side in respect to the axis X. One can therefore also exploit the elasticity of the arc thus formed.

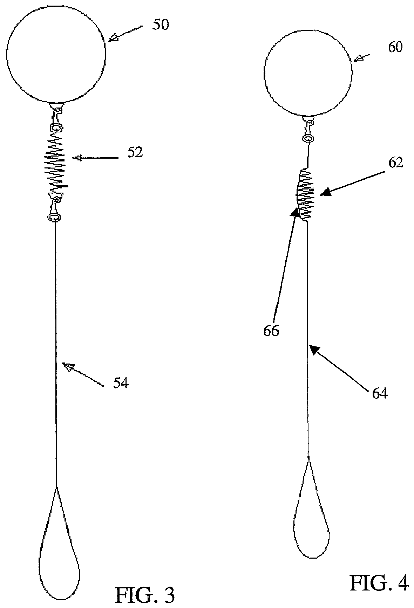

Fig. 3 and 4 show a leash in which the described elastic element is used. The leash in fig. 3 is composed of a collar 50, the elastic element 52 and a cord 54. In a leash so composed any tugs from the animal are absorbed by the element 52, resulting in enhanced walking comfort for the person leading the animal as well as the animal. The element 52 acts like a shock absorber, and said element is an accessory component added to the leash by interposing said element along the cord 54.

Another variant of the leash is shown in fig. 4, where said variant is composed of a collar 60, an elastic element according to the invention 62 and a cord 64. Here the element 62 is integrated in the leash in one single piece, for example by molding said element together with the cord 64. The elastic characteristics of the elastic element 62 can be adjusted with damping means or with restraining means 66, preferably in the form of a resistant band 66 that restrains one or more crests (and/or troughs) of the said elastic element.

It is understood that any minor deviations from the inventive concept expressed in the previous description and drawings attached are nonetheless included in the protection scope of the following claims.

## Claims

1. Leash (52) comprising
a cord along which an elastic element (52; 62), suitable to exercise a return force along a direction of traction (F), is applied,
wherein said elastic element comprises
a section (14) with corrugated shape, with crests (16) and troughs (18) substantially oriented transversally with respect to the direction of traction (F),
wherein the crests (16) and the troughs (18) are oriented perpendicularly in respect to the direction of traction (F), and
the corrugated shape has a bellows-like configuration and is composed of linear segments (20) together connected to one end
wherein the distance between a crest (16) and the subsequent trough (18) increases along the direction of traction (F).

2. Leash (52) according to claim 1, wherein the crests (16) and the troughs (18) extend over all the width of the elastic element (10).

3. Leash (52) according to any one of the previous claims, wherein the distance (d2) between a crest (16) and the subsequent crest (18) increases along the direction of traction (F).

4. Leash (52) according to claim 1, wherein the segments (20) are arranged in such a way that their intermediate point lies on a geometric axis (X).

5. Leash according to claim 1, wherein the elastic element is integrated in the leash in one single piece.

6. Leash according to claim 1, comprising damping means or restraining means {66), preferably in the form of a resistant band that restrains one or more crests and/or troughs of the elastic element, said means being able to adjust the elastic characteristics of the elastic element.

## Patentansprüche

1. Leine (52) bestehend aus
einer Schnur, die an einem dehnbaren Element (52, 62) angebracht ist, die geeignet ist, eine Rückstellkraft entlang einer Zugrichtung (F) auszuüben,
wobei das dehnbare Element Folgendes umfasst
einen Abschnitt (14) mit wellenförmiger Formgebung, mit Stegen (16) und Bäuchen (18), die im Wesentlichen quer zur Zugrichtung (F) ausgerichtet sind,
wobei die Stege (16) und die Bäuche (18) senkrecht zur Zugrichtung (F) ausgerichtet sind, und
die wellenförmige Form eine Balgenform hat und aus linearen Segmenten (20) besteht, die mit einem Ende verbunden sind,
wobei der Abstand zwischen einem Steg(16) und dem nächsten Bauch (18) entlang der Zugrichtung (F) zunimmt.

2. Leine (52) nach Anspruch 1, wobei sich die Stege (16) und die Bäuche (18) über die gesamte Breite des dehnbaren Elements (10) erstrecken.

3. Leine (52) nach einem der vorhergehenden Ansprüche, wobei der Abstand (d2) zwischen einem Steg (16) und dem nachfolgenden Steg (18) entlang der Zugrichtung (F) zunimmt.

4. Leine (52) nach Anspruch 1, wobei die Segmente (20) so angeordnet sind, dass ihre Zwischenpunkte auf einer Achse (X) liegen.

5. Leine nach Anspruch 1, wobei das dehnbare Element in einem Stück in der Leine integriert ist.

6. Leine nach Anspruch 1, mit einer Dämpfungsvorrichtung oder einer Begrenzungsvorrichtung (66) vorzugsweise in Form eines widerstandsfähigen Bandes, das eine oder mehrere Stege und/oder Bäuche des dehnbaren Elements verbindet, wobei genannte Vorrichtungen zur Einstellung der dehnbaren Eigenschaften des Elements ausgelegt sind.

## Revendications

1. Laisse (52) comprenant
une sangle à laquelle est appliqué un élément élastique (52, 62) apte à exercer une force de rappel le long de la direction de traction (F),
**caractérisée en ce que** ledit élément élastique comprend
un tronçon (14) à conformation ondulée, avec des crêtes (16) et des creux (18) substantiellement orientés transversalement par rapport à la direction de traction (F),
**caractérisée en ce que** les crêtes (16) et les creux (18) sont orientés perpendiculairement par rapport à la direction de traction (F), et
la conformation ondulée présente une structure à soufflet et est constituée de segments linéaires (20) reliés entre eux à une extrémité,
**caractérisée en ce que** la distance entre une crête (16) et le creux suivant (18) est croissante le long de la direction de traction (F).

2. Laisse (52) selon la revendication 1, **caractérisée en ce que** les crête (16) et les ventres (18) s'étendent sur toute la longueur de l'élément élastique (10).

3. Laisse (52) selon une des revendications précédentes, **caractérisée en ce que** la distance (d2) entre une crête (16) et la suivante (18) est croissante le long de la direction de traction (F).

4. Laisse (52) selon la revendication 1, **caractérisée en ce que** les segments (20) sont disposés de telle sorte que les points intermédiaires reposent sur un axe géométrique (X).

5. Laisse selon la revendication 1, **caractérisée en ce que** l'élément élastique est intégré dans la laisse en une pièce unique.

6. Laisse selon la revendication 1, comprenant des systèmes amortisseurs ou des systèmes limiteurs (66), de préférence sous la forme d'une bande résistante qui lie une ou plusieurs crêtes et/ou creux de l'élément élastique, ces systèmes étant aptes à régler les caractéristiques élastiques de l'élément élastique.
